# EUROPEAN PATENT APPLICATION

(11) **EP 2 520 675 A2**
(43) Date of publication of application: **07.11.2012**
(21) Application number: 12166229.0
(22) Date of filing: 30.04.2012
(51) Int. Cl.: C21D 1/30, C21D 1/42, C21D 9/00, F01D 5/00

(54) **Treatment for preventing stress corrosion cracking**

(30) Priority: 05.05.2011 US 201113101686
(71) Applicant: General Electric Company, Schenectady, NY 12345 (US)
(72) Inventor: Witney, Andrew Batton, Schenectady, NY New York 12345 (US); Schwant, Robin Carl, Schenectady, NY New York 12345 (US)
(74) Representative: Cleary, Fidelma

(57) **Abstract**

A treatment for prevention of stress corrosion cracking (SCC) and a treated component (210) are disclosed. A surface (214) of a relatively high tensile strength component (210) is heated to a temperature at which at least one of tempering or annealing occurs. The surface (214) is then cooled in a controlled manner so as to maintain a reduced tensile strength at the surface (214) that minimizes SCC while keeping a relatively high tensile strength in the remainder of the component (210).

## Description

### BACKGOUND OF THE INVENTION

The subject matter disclosed herein relates generally to stress corrosion cracking (SCC) prevention. More specifically, the present invention relates to a treatment for preventing SCC in metal parts including turbine and generator components.

Excessive pressure, heat, and moisture, such as may be found inside a turbine or generator, can form an extreme environment. This environment, with the inevitable impurities found within, can be corrosive to the components that make up a turbine or generator. Under operational stresses, this environment can lead to SCC in the components. Components with higher tensile strength tend to be more susceptible to SCC. However, components having low tensile strength may not be able to withstand the stresses required for turbine operation.

### BRIEF DESCRIPTION OF THE INVENTION

A treatment for prevention of stress corrosion cracking (SCC) and a treated component are disclosed. A surface of a relatively high tensile strength component is heated to a temperature at which at least one of tempering or annealing occurs. The surface is then cooled in a controlled manner so as to maintain a reduced tensile strength at the surface that minimizes SCC while keeping a relatively high tensile strength in the remainder of the component.

In a first aspect, the invention resides in a method for treating a component to minimize stress corrosion cracking (SCC), comprising: heating a surface of a component to a temperature at which at least one of tempering or annealing occurs at the surface; and cooling the component in a controlled manner so as to maintain a surface tensile strength that minimizes SCC, wherein the resultant surface tensile strength is lower than a resultant high tensile strength of a remainder of the component.

In a second aspect, the invention resides in a component treated to minimize stress corrosion cracking (SCC), having a structural metallic layer having a relatively high structural tensile strength; and a treated metallic layer composed of a material that is chemically homogeneous with the structural metallic layer, the treated metallic layer substantially forming at least a portion of an outer surface of the component and having a treated tensile strength that is lower than the structural layer tensile strength, the component formed by the process, comprising: heating a surface of the component to a temperature at which at least one of tempering or annealing of the exterior surface of the component occurs; and cooling the surface of the component in a controlled manner so as to maintain a resultant surface tensile strength that minimizes SCC.

### BRIEF DESCRIPTION OF THE DRAWING

Embodiments of the present invention will now be described, by way of example only, with reference to the accompanying drawings in which:
FIG. 1 shows a perspective partial cut-away illustration of a conventional steam turbine pursuant to an aspect of the invention;
FIG. 2 shows a fragmentary cross-sectional view of a portion of a turbine illustrating various stationary and rotational parts thereof pursuant to an aspect of the invention;
FIG. 3 shows a partial cut-away illustration of a component undergoing heat treatment with an induction heater pursuant to an aspect of the invention; and
FIG. 4 shows a perspective view of a treated component pursuant to an aspect of the invention.

### DETAILED DESCRIPTION OF THE INVENTION

A treatment for prevention of stress corrosion cracking (SCC) and a treated component are disclosed. A surface of a relatively high tensile strength component is heated to a temperature at which at least one of tempering or annealing occurs. The surface is then cooled in a controlled manner so as to maintain a reduced tensile strength at the surface that minimizes SCC while keeping a relatively high tensile strength in the remainder of the component.

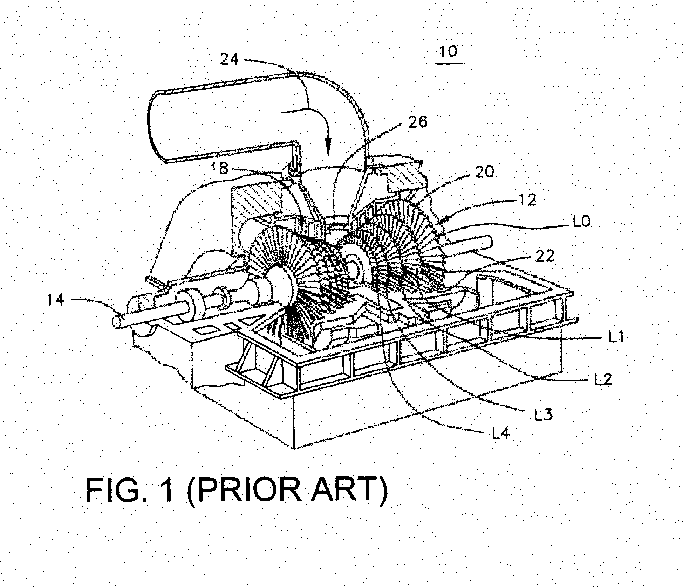

Referring to the drawings, FIG. 1 shows a perspective partial cut-away illustration of a multiple stage steam turbine 10. Even though FIG 1 illustrates a steam turbine, it should be recognized by one skilled in the art that the teachings of this invention can be applied in any environment in which components may be susceptible to SCC, including, but not limited to a gas turbine, a wind turbine, a generator, an aircraft engine, a valve, a tank, a pipe, a container, a propeller, the hull of a ship, or anything else that may operate in a harsh environment in which SCC may be a problem. Nevertheless, in the embodiment illustrated by FIG.1, turbine 10 can be a condensing steam turbine or a non-condensing steam turbine. Turbine 10 includes a rotor 12 that includes a rotating shaft 14 and a plurality of axially spaced rotor wheels 18. A plurality of rotating blades or "buckets" 20 are mechanically coupled to each rotor wheel 18. More specifically, blades 20 are arranged in rows that extend circumferentially around each rotor wheel 18. A plurality of stationary nozzles 22 extends circumferentially around shaft 14, and the nozzles are axially positioned between adjacent rows of blades 20. Stationary nozzles 22 cooperate with blades 20 to form a stage and to define a portion of a steam or hot gas flow path through turbine 10.

In operation, gas or steam 24 enters an inlet 26 of turbine 10 and is channeled through stationary nozzles 22. Nozzles 22 direct gas or steam 24 downstream against blades 20. Gas or steam 24 passes through the remaining stages imparting a force on blades 20 causing shaft 14 to rotate. At least one end of turbine 10 may extend axially away from rotor 12 and may be attached to a load or machinery (not shown) such as, but not limited to, a generator, and/or another turbine.

In one embodiment, turbine 10 may include five stages. The five stages are referred to as L0, L1, L2, L3 and L4. Stage L4 is the first stage and is the smallest (in a radial direction) of the five stages. Stage L3 is the second stage and is the next stage in an axial direction. Stage L2 is the third stage and is shown in the middle of the five stages. Stage L1 is the fourth and next-to-last stage. Stage L0 is the last stage and is the largest (in a radial direction). It is to be understood that five stages are shown as one example only, and each turbine may have more or less than five stages. Also, as will be described herein, the teachings of the invention do not require a multiple stage turbine.

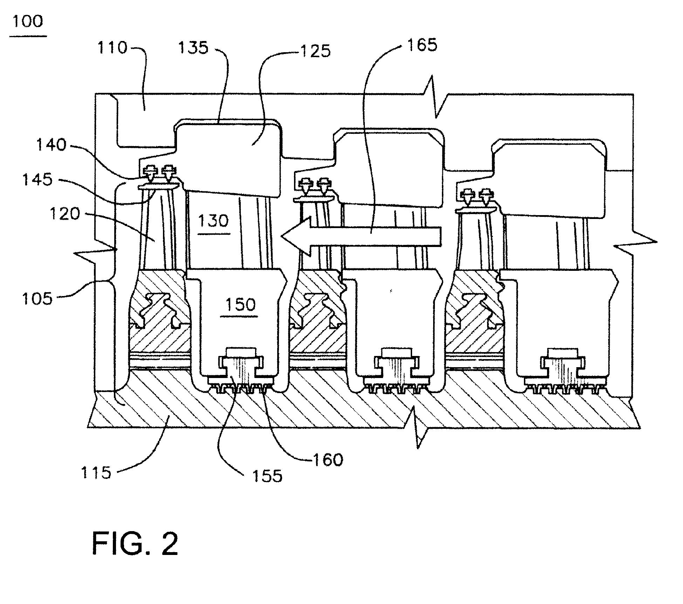

Referring now to FIG. 2, there is illustrated a portion 100 of turbine 10 (FIG. 1) having a rotary component 105 and a stationary component 110. Rotary component 105 includes, for example a rotor 115 mounting a plurality of circumferentially spaced buckets 120 at spaced axial positions along the rotor forming parts of the various turbine stages. Stationary component 110 may include a plurality of diaphragms 125 mounting partitions 130 defining nozzles which, together with respective buckets, form the various stages of turbine 100. As illustrated in FIG. 2, an outer ring 135 of diaphragm 125 carries one or more rows of seal teeth 140 for sealing with shrouds or covers 145 adjacent the tips of buckets 120. Similarly, an inner ring 150 of diaphragm 125 mounts an arcuate seal segment 155. The seal segment has radially inwardly projecting high-low teeth 160 for sealing with rotor 115. Similar seals are provided at the various stages of turbine 100 as illustrated and the direction of the steam or hot gas flow path is indicated by the arrow 165.

Certain components within turbine 10 (FIG. 1) may be susceptible to SCC, due to their local environment within turbine 10 during operation. These components include, but are not limited to buckets or blades 20, 120, wheels 18, rotor 12, and/or any component used to couple one of the above components to another of the above components and/or to another component within turbine 10. Previously, alloys with high tensile strength could not be used to make these components. Instead, these components have been constructed using alloys that are made to have the lowest tensile strength possible given the load requirement expected for the component. Alternatively, costly highly-alloyed metals are used to mitigate SCC.

The current invention treats the component to minimize SCC. This is done by changing, via the treatment, the tensile strength of the portion of the surface of the component for which SCC resistance is desired. This surface can include, for example, any portion of the component that can come into contact with a corrosive environment. The tensile strength of the remainder of the component remains relatively unchanged. The result is a component having a homogeneous chemical composition throughout with an interior having relatively high tensile strength (e.g., a skeleton or structural layer) while having a stress corrosion resistant, lower tensile strength surface (e.g., skin or treated layer) that is adjacent to and integral with the structural layer.

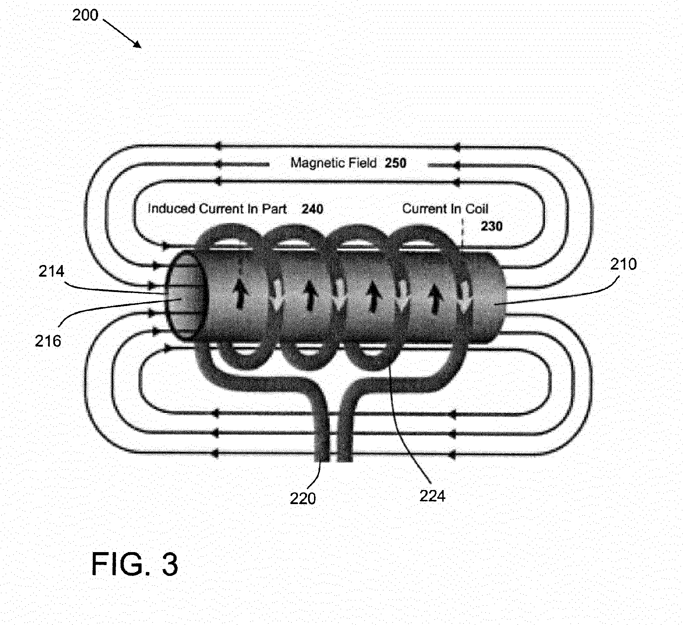

Referring now to FIG. 3, there is illustrated one embodiment of a heating stage 200 of the SCC treatment for a component 210. In heating stage 200, a surface of component 210 is heated, such as with an induction heater 220. Prior to this heating, component 210 may be held at any temperature between room temperature and an elevated temperature below the temperature intended for the heat treatment. When heating stage 200 uses induction heater 220, such as illustrated in FIG. 3, an alternating current (current) 230 is passed through coils 224 of induction heater 220. In one embodiment, current 230 is in a range of approximately 100-400 kHz and is produced by a power supply rated at between 50-400 kW. In any case, current 230 produces a magnetic field 250, which in turn induces eddy currents 240 in component 210. Induced eddy currents 240, encounter material resistance which causes the metal of surface 214 to increase in temperature by a mechanism known as Joule heating. There is an inverse relationship between the depth of the heating beneath surface 214 and frequency of current 230 passed through coils 224. Higher frequency current 230 through coils 224 couples with and inductively heats a shallower layer of surface 214. The portion of component 210 beneath surface 214 is not directly heated (but may increase in temperature nonetheless as a result of a secondary mechanism such as conduction of heat from surface 214). In any case, heating stage 200 is designed such that the temperature of a remainder 216 of component 210 beneath surface 214 is relatively unchanged. As an example, surface 214 may be on the order of 0.125 millimeter in thickness.

In the present invention, induction heater 220 can be used to heat exterior surface 214 of component 210 to a temperature at which at least one of tempering or annealing occurs. In the alternative, any other process of heating a surface of a component to a temperature that is greater than the tempering or annealing temperature while relatively maintaining the temperature of the remainder of the component that is now known or later discovered may be used, including, but not limited to heating with a laser or radiant heater.

Component 210 can comprise a ferrous alloy of any type, including, but not limited to austenitic, martensitic, bainitic stainless steels, precipitation hardened steels, etc. In the case that martensitic stainless steels, bainitic steels or precipitation hardened steels are used, component 210 may have chromium contents less than 20%, nickel contents less than 12%, manganese less than 2%, and molybdenum less than 5%. In any case, as the temperature increases in such alloys tempering of the alloy occurs, producing softer material. In certain steel alloys, these processes begin to occur at or above 540 degrees Celsius, such as around 600-800 degrees Celsius. Having achieved such a temperature with induction heater 220, a treatment of only a few seconds or minutes is sufficient to achieve some softening of the heated surface layer 212.

Once heating stage 200 is complete, exterior surface 214 of component 210 is cooled in a controlled manner so as to maintain a reduced tensile strength that minimizes SCC. In other fields, in which a hardened surface with enhanced tensile strength is desired, the cooling of the heated component is performed in a manner that causes very rapid cooling, known as quenching. In contrast, in the current invention, for steels and steel-like materials, the cooling of component 210 is controlled, but in a manner that typically avoids such quenching, and that particularly avoids any quenching that could ultimately result in hardening of exterior surface 214. Such quenching could ultimately result in hardening at the surface if, for example, the heating created temperatures in excess of an alloy's austenitizing temperature at any location on the exterior surface. The lower tensile strength that is desired for external surface 214 and achieved during the heating stage can be maintained during cooling by employing any of several methods of control over the cooling rate. One such method of controlled cooling involves leaving induction heater 220 (or alternative heating apparatus) in its operational position with respect to component 210, but adjusting the power of the induction current 230 in a manner that causes the temperature in external surface 214 to decrease along a desired thermal profile. This approach can also be used to hold the temperature of external surface 214 at temperatures intermediate between the heat treatment temperature and room temperature for some or all of the cooling time. In addition or in the alternative, all or a portion of the cooling can take the form of "air cooling" in which cooling of component 210 occurs without use of induction heater 220 or alternative heating apparatus. In addition or in the alternative, the frequency and power of the induction current can be decreased during cooling to control more precisely the thermal profile of the entire component system (exterior surface and relatively harder interior) during cooling. These methods of control over cooling rate can be used individually or in conjunction with one another to reduce risk of introducing undesired residual stresses in the component.

Measurements of hardness (or microhardness) can be taken as an approximation of tensile strength to determine whether the desired tensile strength has been achieved. It should be understood that in some embodiments the heat treatment could lower the tensile strength in portions of component 210 other than surface 214, such as by conduction. In these embodiments, a majority of the heat treatment would occur at surface 214, with a relatively much small amount occurring in interior metallic layer. As such, in one embodiment, pre-heating stage 200 component 210 begins with a tensile strength throughout that is stronger than the desired final tensile strength for the interior metallic layer. That way, after treatment that lowers strength throughout (more so at the surface) the result is a structural layer having a tensile strength that is weaker than it started, but satisfies fmal tensile strength requirements.

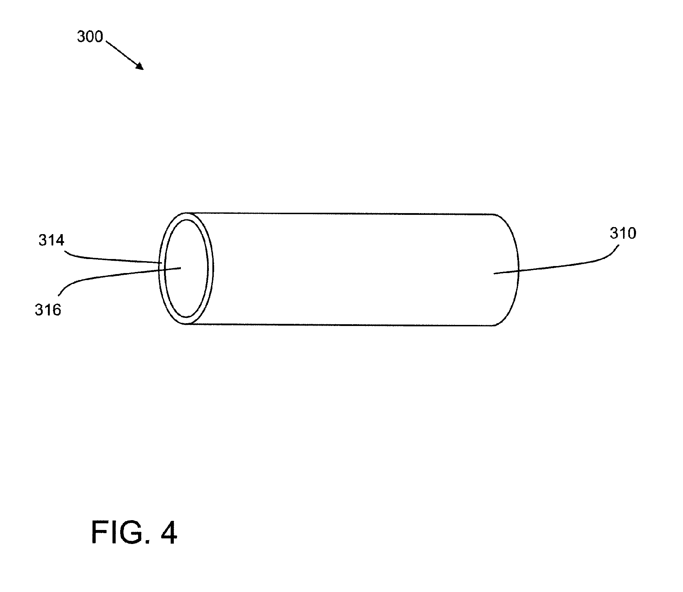

Turning now to FIG. 4, there is illustrated a perspective view 300 of a component 310 that has been treated to minimize SCC according to an embodiment of the invention. As illustrated, component 310 has an interior metallic layer 316 (e.g., the skeleton or structural layer) and an external metallic layer 314 (e.g., the skin or treated layer). Interior metallic layer 316 of component 310 has an tensile strength that is relatively high. This interior metallic layer 316 is generally a large percentage of the entire component 310. Exterior metallic layer 314 of component 310 is composed of a material that is adjacent to and integral with the interior metallic layer and has a chemical composition that is homogeneous with that of the interior metallic layer. As shown, exterior metallic layer 314 substantially forms at least a portion of outer surface of component 310. Further, exterior metallic layer 314 can have a tensile strength that is lower than interior metallic layer 316 and minimizes SCC, having been treated by the heating and cooling process described above. Further, as the depth of exterior metallic layer 314 is only a small fraction of the depth of component 310 as a whole, component 310 maintains an overall strength that is on the same order as an identical component without a treated exterior layer.

To this extent, component 310 is adapted to perform better in the harsh environment of turbine 10 (FIG. 1). Thus, such components of turbine 10, which can include, but is not limited to buckets 120, expansion bellows, wheels 18, blades 20, rotor 12, generator retaining ring and/or coupling components could be initially created from materials having relatively high tensile strength and then treated to form exterior metallic layer 314 that has lower tensile strength and, as such, is resistant to SCC. Further, the treatment may be focused so that only the specific areas of component 310 for which SCC is a concern are treated. Such areas may include, for example, a dovetail pin hole in a bucket 20 into which a pin is inserted, stressed areas of the rotor 14, and/or the dovetail area of buckets 120 (FIG. 2).

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

While various embodiments are described herein, it will be appreciated from the specification that various combinations of elements, variations or improvements therein may be made by those skilled in the art, and are within the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method for treating a component (210) to minimize stress corrosion cracking (SCC), comprising:
heating a surface (214) of a component (210) to a temperature at which at least one of tempering or annealing occurs at the surface (214); and
cooling the component (210) in a controlled manner so as to maintain a surface (214) tensile strength that minimizes SCC, wherein the resultant surface (214) tensile strength is lower than a resultant high tensile strength of a remainder of the component (210).

2. The method of claim 1, wherein the heating includes induction heating.

3. The method of claim 1 or 2, wherein the temperature is greater than 540 degrees Celsius.

4. The method of claim 1, 2 or 3, wherein the heating and cooling produce a full anneal of the surface (214).

5. The method of any of claims 1 to 4, wherein the cooling includes:
maintaining a heating apparatus in an operational position with respect to the component (210); and
adjusting the heating in a manner that causes the temperature in the surface (214) to decrease along a desired thermal profile.

6. The method of any of claims 1 to 5, wherein the component includes a generator component.

7. The method of claim 6, wherein the component is selected from the group consisting of: a generator rotor or a generator retaining ring.

8. The method of any of claims 1 to 5, wherein the component includes a turbine component.

9. The method of claim 8, wherein the component is selected from the group consisting of: a turbine bucket, a turbine blade, or a turbine rotor.

10. The method of any of claims 1 to 9, wherein a material of the surface (214) is chemically homogeneous with a material of the remainder of the component (210).

11. A component (210) treated to minimize stress corrosion cracking (SCC), having a structural metallic layer having a relatively high structural tensile strength; and a treated metallic layer composed of a material that is chemically homogeneous with the structural metallic layer, the treated metallic layer substantially forming at least a portion of an outer surface (214) of the component (210) and having a treated tensile strength that is lower than the structural layer tensile strength, the component (210) formed by the process, comprising:
heating a surface (214) of the component (210) to a temperature at which at least one of tempering or annealing of the exterior surface (214) of the component (210) occurs; and
cooling the surface (214) of the component (210) in a controlled manner so as to maintain a resultant surface (214) tensile strength that minimizes SCC.

12. The component (210) of claim 11, wherein the heating includes induction heating.

13. The component (210) of claim 11 or 12, wherein the heating and cooling produce a full anneal of the surface (214).

14. The component of claim 11 to 13, wherein the cooling includes:
maintaining a heating apparatus in an operational position with respect to the component; and
adjusting the heating in a manner that causes the temperature in the surface (214) to decrease along a desired thermal profile.

15. The method of any of claims 11 to 14, wherein the component (210) is selected from the group consisting of: a generator rotor, a generator retaining ring, a turbine bucket, or turbine blade or turbine rotor.
